(19) Europäisches Patentamt
European Patent Office
Office européen des brevets

(11) **EP 4 654 067 A1**

(12) **EUROPEAN PATENT APPLICATION**
published in accordance with Art. 153(4) EPC

(43) Date of publication:
**26.11.2025 Bulletin 2025/48**

(21) Application number: **23961278.1**

(22) Date of filing: **25.12.2023**

(51) International Patent Classification (IPC):
**G06F 30/23** (2020.01)　　**G06F 30/15** (2020.01)
**G06F 119/14** (2020.01)

(86) International application number:
**PCT/CN2023/141621**

(87) International publication number:
**WO 2025/123423 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2023 CN 202311739031**

(71) Applicant: **Zoomlion Heavy Industry Science and Technology Co., Ltd.**
**Changsha, Hunan 410013 (CN)**

(72) Inventors:
• **GAO, Rongzhi**
**Changsha, Hunan 410013 (CN)**
• **GUO, Song**
**Changsha, Hunan 410013 (CN)**
• **SONG, Guoqing**
**Changsha, Hunan 410013 (CN)**
• **NIE, Yibiao**
**Changsha, Hunan 410013 (CN)**
• **WANG, Jiaqian**
**Changsha, Hunan 410013 (CN)**

(74) Representative: **Petraz, Gilberto Luigi et al**
**GLP S.r.l.**
**Viale Europa Unita, 171**
**33100 Udine (IT)**

(54) **BOOM SYSTEM STRUCTURE OPTIMIZATION METHOD AND APPARATUS, ENGINEERING MACHINE, AND READABLE STORAGE MEDIUM**

(57)　Disclosed in the present application are a boom system structure optimization method and apparatus, a construction machinery, and a readable storage medium. The method comprises: obtaining a three-dimensional model of a boom system of an construction machinery, at least one boom section in the three-dimensional model being obtained by performing weight reduction optimization with a single boom section as an optimization object; performing structural weight reduction optimization on the three-dimensional model with the boom system as an optimization object, so as to obtain a boom system weight reduction model, the boom system weight reduction model comprising a plurality of plates; selecting a target optimization object from all the plates; determining a redundancy mass according to the mass of the boom system corresponding to the three-dimensional model and the mass of the boom system corresponding to the boom system weight reduction model; and, according to the redundancy mass and the target optimization object, optimizing the boom system weight reduction model with a minimum end displacement of the boom system as an objective, thereby obtaining a target optimization model.

acquiring a three-dimensional model of a boom system of a construction machinery, wherein at least one boom section of the three-dimensional model is obtained through weight reduction optimization with a single boom section as an optimization object — 110

performing structural weight reduction optimization on the three-dimensional model with the boom system as an optimization object to obtain a boom system weight reduction model, wherein the boom system weight reduction model comprises a plurality of plates — 120

selecting a target optimization object from all the plates — 130

according to a mass of the boom system corresponding to the three-dimensional model and a mass of the boom system corresponding to the boom system weight reduction model, determining a redundant mass — 140

according to the redundant mass and the target optimization object, optimizing the boom system weight reduction model with an objective of minimizing the tip deflection of the boom system to obtain a target optimization model — 150

FIG.1

## Description

### Cross Reference to Related Applications

This application claims the benefit of the Chinese Patent Application 202311739031.4 filed on December 15, 2023, and the contents of which are incorporated herein by reference.

### Field of the Invention

The present application relates to the technical field of construction machinery, in particular to a method and apparatus for structural optimization of a boom system, a construction machinery, and a readable storage medium.

### Background of the Invention

For construction machinery, such as truck-mounted concrete pumps, with intense competition in the market, customers are more inclined to select models with longer meter section, lower relocation frequency during pumping, high working efficiency, greater operational flexibility, and low energy consumption. The development of compliant, low-cost, high-reliability ultra-long meter-section truck-mounted concrete pumps has become a critical focus for various truck-mounted concrete pump manufacturers. The lighter the weight of the boom system of the truck-mounted concrete pump , the longer the length can be designed, the lower the load on the whole vehicle, and the higher the stability of the whole vehicle. Therefore, it is critical to increase the lightweight level of the boom system.

In addition, during the pumping process, the boom system experiences vibrations due to impacts caused by the hydraulic system itself and variations in concrete load. These vibrations result in an unpredictable trajectory of the end of the boom, which affects the pumping efficiency and stability.

Accordingly, there is an urgent need for a method for structural optimization of a boom system, which should not only achieve maximum lightweighting of the boom but also reduce vibrations in the boom system.

### Summary of the Invention

An objective of the embodiments of the present application is to provide a method and apparatus for structural optimization of a boom system, a construction machinery, and a readable storage medium in order to optimize the structure of the boom system and solve or at least partially address the aforementioned problems.

In order to achieve the above objective, a first aspect of the present application provides a method for structural optimization of a boom system, including:

acquiring a three-dimensional model of a boom system of a construction machinery, wherein at least one boom section of the three-dimensional model is obtained through weight reduction optimization with a single boom section as an optimization object;

performing structural weight reduction optimization on the three-dimensional model with the boom system as an optimization object to obtain a boom system weight reduction model, wherein the boom system weight reduction model includes a plurality of plates;

selecting a target optimization object from all the plates;

according to a mass of the boom system corresponding to the three-dimensional model and a mass of the boom system corresponding to the boom system weight reduction model, determining a redundant mass; and

according to the redundant mass and the target optimization object, optimizing the boom system weight reduction model with an objective of minimizing the tip deflection of the boom system to obtain a target optimization model.

Optionally, in an embodiment of the present application, the performing structural weight reduction optimization on the three-dimensional model with the boom system as the optimization object to obtain the boom system weight reduction model includes:

according to the three-dimensional model, constructing a finite element model of the boom system;

according to the finite element model, constructing first optimization mathematical models of the boom system under different boom posture categories by taking an element density of the boom system as a first design variable, minimizing the mass of the boom system as a first objective function, and a boom operating stress being less than a preset stress threshold and tip deflection of the boom system being less than or equal to a preset deflection threshold as a first constraint condition;

solving each first optimization mathematical model to determine an initial boom system weight reduction model under each boom posture category; and

determining, for the initial boom system weight reduction model under each boom posture category according to a optimization solution intersection selection principle, a first optimization solution intersection under all boom posture categories as the boom system weight reduction model.

Optionally, in an embodiment of the present application, the selecting the target optimization object from all the plates includes:

dividing each plate into a plurality of independent regions;

constructing second optimization mathematical models of the boom system under different boom posture categories by taking plate thicknesses of the plurality of independent regions as a second design variable, minimizing the tip deflection of the boom system as a second objective function, and the mass of the boom system being less than or equal to a total mass of the boom system corresponding to the boom system weight reduction model as a second constraint condition;

solving each second optimization mathematical model to obtain a sensitivity coefficient relative to the tip deflection of the boom system and a sensitivity coefficient relative to the mass of the boom system of the plate thickness variable of each independent region under each boom posture category; and

selecting, according to the optimization solution intersection selection principle, the independent region with the sensitivity coefficient relative to the tip deflection being greater than the first coefficient threshold and the sensitivity coefficient relative to the mass being less than a second coefficient threshold under each boom posture category as the target optimization object.

Optionally, in an embodiment of the present application, the dividing each plate into the plurality of independent regions includes:

dividing each plate into a connected region and a non-connected region, wherein the connected region is where each plate is connected to other plates; and

dividing, for each plate, the connected region into a first number of independent regions and the non-connected region into a second number of independent regions, wherein the first number is greater than the second number.

Optionally, in an embodiment of the present application, the method further includes:

dividing the redundant mass into at least one target mass increment according to a preset weighting factor according to the redundant mass and the target optimization object, the optimizing the boom system weight reduction model with the objective of minimizing the tip deflection of the boom system to obtain the target optimization model includes:

according to the at least one target mass increment, a preset priority order of the at least one target mass increment, and the target optimization object, optimizing the boom system weight reduction model with the objective of minimizing the tip deflection of the boom system to obtain a target optimization model.

Optionally, in an embodiment of the present application, the preset weighting factor is determined according to a genetic algorithm, the preset priority order of the plurality of target mass increments is determined according to the preset weight, the plurality of target mass increments including a dimensional optimization mass increment, a topography optimization mass increment, and a baffle design optimization mass increment.

Optionally, in an embodiment of the present application, according to the plurality of target mass increments, the preset priority order of the plurality of target mass increments, and the target optimization object, the optimizing the boom system weight reduction model to obtain the target optimization model includes:

performing plate thickness dimensional optimization on the boom system weight reduction model based on the target optimization object and the dimensional optimization mass increment to obtain a boom system dimensional optimization model;

performing topography optimization on the boom system dimensional optimization model based on the target optimization object and the topography optimization mass increment to obtain a boom system topography optimization model; and

performing baffle design optimization on the boom system topography optimization model based on the target optimization object and the baffle design optimization mass increment to obtain a boom system baffle design optimization model, which serves as the target optimization model.

Optionally, in an embodiment of the present application, the performing plate thickness dimensional optimization on the boom system weight reduction model based on the target optimization object and the dimensional optimization mass increment to obtain the boom system dimensional optimization model includes:

constructing third optimization mathematical models of the boom system under different boom posture categories by taking masses of a plurality of independent regions in the boom system weight reduction model as a third design variable, minimizing the tip deflection of the boom system as a third objective function, and the mass of the boom system being less than or equal to a sum of the mass of the boom system corresponding to the boom system weight reduction model and the dimensional optimization mass increment as a third constraint condition;
solving each third optimization mathematical model to determine an initial boom system dimensional optimization model under each boom posture category; and
determining, for the initial boom system dimensional optimization model under each boom posture category according to the optimization solution intersection selection principle, a second optimization solution intersection under all boom posture categories to obtain the boom system dimensional optimization model.

Optionally, in an embodiment of the present application, the performing topography optimization on the boom system dimensional optimization model based on the target optimization object and the topography optimization mass increment to obtain the boom system topography optimization model includes:

constructing fourth optimization mathematical models of the boom system under different boom posture categories by taking masses of a plurality of independent regions in the boom system dimensional optimization model as a fourth design variable, minimizing the tip deflection of the boom system as a fourth objective function, and the mass of the boom system being less than or equal to a sum of the mass of the boom system corresponding to the boom system weight reduction model, the dimensional optimization mass increment, and the topography optimization mass increment as a fourth constraint condition;
solving each fourth optimization mathematical model to determine an initial boom system topography optimization model under each boom posture category; and
determining, for the initial boom system topography optimization model under each boom posture category according to the optimization solution intersection selection principle, a third optimization solution intersection under all boom posture categories to obtain the boom system topography optimization model.

Optionally, in an embodiment of the present application, the performing baffle design optimization on the boom system topography optimization model based on the target optimization object and the baffle design optimization mass increment to obtain the boom system baffle design optimization model, which serves as the target optimization model includes:

constructing fifth optimization mathematical models of the boom system under different boom posture categories by taking masses of a plurality of independent regions in the boom system topography optimization model as a fifth design variable, minimizing the tip deflection of the boom system as a fifth objective function, and the mass of the boom system being less than or equal to a sum of the mass of the boom system corresponding to the boom system weight reduction model, the dimensional optimization mass increment, the topography optimization mass increment, and the baffle design optimization mass increment as a fifth constraint condition;
solving each fifth optimization mathematical model to determine an initial boom system baffle design optimization model under each boom posture category; and
determining, for the initial boom system baffle design optimization model under each boom posture category according to the optimization solution intersection selection principle, a fourth optimization solution intersection under all boom posture categories to obtain the boom system baffle design optimization model, which serves as the target optimization model.

Optionally, in an embodiment of the present application, the optimization solution intersection selection principle includes:

finding an intersection of optimization solutions under each boom posture category; and
in a case where there is no intersection of the optimization solutions under each boom posture category, removing the optimization solution corresponding to the boom posture category with the smallest proportion, and repeatedly performing the step of finding an intersection of optimization solutions under each boom posture category until an intersection of optimization solutions is obtained, wherein the proportion of each boom posture category is determined according to actual operating conditions.

Optionally, in an embodiment of the present application, the optimization solution intersection selection principle includes:

finding, for each boom posture category, an intersection of optimization solutions of boom postures with an operating time proportion exceeding a preset proportion threshold;

in a case where there is no intersection of the optimization solutions of the boom postures with an operating time proportion exceeding a preset proportion threshold under each boom posture category, removing the optimization solution corresponding to the boom posture category with the smallest proportion, and repeatedly performing the step of finding, for each boom posture category, an intersection of optimization solutions of boom postures with an operating time proportion exceeding a preset proportion threshold until an intersection of optimization solutions is obtained, wherein the proportion of each boom posture category is determined according to actual operating conditions.

According to a second aspect of the present application, there is provided an apparatus for structural optimization of a boom system, including:

a memory, configured to store instructions; and

a processor, configured to recall the instructions from the memory and to implement the method for structural optimization of the boom system according to the first aspect upon execution of the instructions.

According to a third aspect of the present application, there is provided a construction machinery, and a boom system of the construction machinery is obtained by the method for structural optimization of the boom system according to the first aspect.

According to a fourth aspect of the present application, there is provided a machine-readable storage medium having stored thereon instructions for causing a machine to perform the method for structural optimization of the boom system according to the first aspect.

Through the aforementioned technical solutions, after obtaining a three-dimensional model of the boom system by performing weight reduction optimization on at least one boom section with a single boom section as the optimization target, secondary structural weight reduction optimization is performed on the three-dimensional model with the boom system as the optimization target. Additionally, the redundant mass from the secondary weight reduction optimization is redistributed to reduce the tip deflection of the boom. This approach not only ensures the lightweighting of the boom system through weight reduction optimization with a single boom section as the optimization object but also reduces boom vibrations by redistributing the redundant mass.

Other features and advantages of the embodiments of the present application will be described in detail in the Detailed Description section that follows.

**Brief Description of Drawings**

The accompanying drawings are included to provide a further understanding of the embodiments of the application and constitute a part of this specification, and together with the detailed description below serve to explain, but not to limit, the embodiments of the present application. In the drawings:

FIG. 1 schematically illustrates a flow chart of a method for structural optimization of a boom system according to an embodiment of the present application;

FIG. 2 schematically illustrates a boom system weight reduction model according to an embodiment of the present application;

FIG. 3 schematically illustrates structural diagrams of different boom posture categories when the boom system is operating according to embodiments of the present application;

FIG. 4 schematically illustrates a structural diagram of a plate according to an embodiment of the present application;

FIG. 5 schematically illustrates a structural diagram of the boom system after plate thickness dimensional optimization according to an embodiment of the present application;

FIG. 6 schematically illustrates the structural diagram of the boom system after topography optimization according to an embodiment of the present application;

FIG. 7 schematically illustrates the structural diagram of the boom system after baffle design optimization according to an embodiment of the present application; and

FIG. 8 schematically illustrates a structural diagram of an apparatus for structural optimization of a boom system according to an embodiment of the present application.

**Detailed Description of the Embodiments**

To make the objectives, technical solutions and advantages of the embodiments of the present application more clear, the technical solutions in the embodiments of the present application will be clearly and completely described below in conjunction with the accompanying drawings in the embodiments of the present application, it should be understood that the specific implementations described herein are only used to illustrate and explain the embodiments of the present application, and are not used to limit the embodiments of the present application. Based on the embodiments in the present application, all other embodiments obtained by those of ordinary skill in the art without making inventive labor, belong to the scope of protection of the present application.

It should be noted that, if the embodiments of the present application relate to directionality indications (such as up, down, left, right, front, back,...), the directionality indications are used only for explaining the relative positional relationship, movement, etc. between components in a particular posture (as shown in the drawings), and if the particular posture is changed, the directionality indications are changed accordingly.

In addition, if there is a description relating to "first", "second", or the like in an embodiment of the present application, the description of "first", "second", or the like is for the purpose of description only, and cannot be understood as indicating or implicitly indicating the relative importance thereof or implicitly indicating the number of technical features indicated. Thus, a feature defined as "first" or "second" may explicitly or implicitly include at least one of the features. In addition, the technical solutions of the various embodiments may be combined with each other, but they must be realized on the basis that those skilled in the art can realize them. When the combination of technical solutions conflicts with each other or cannot be realized, it should be considered that the combination of technical solutions does not exist and is not within the scope of protection claimed by the present application.

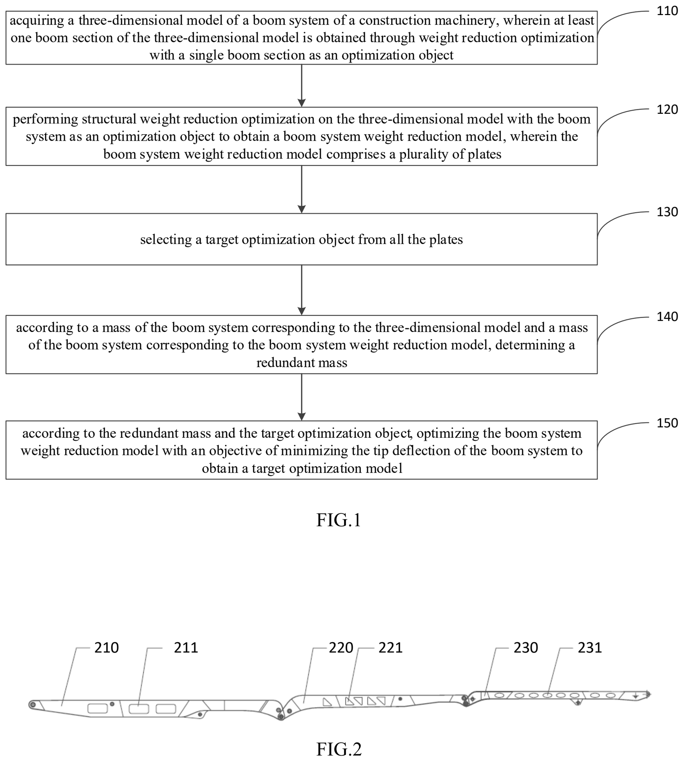

FIG. 1 schematically illustrates a flow chart of a method for structural optimization of a boom system according to an embodiment of the present application. As shown in FIG. 1, an embodiment of the present application provides a method for structural optimization of a boom system, which may include the following steps.

Step 110, acquiring a three-dimensional model of a boom system of a construction machinery, wherein at least one boom section of the three-dimensional model is obtained through weight reduction optimization with a single boom section as an optimization object.

The three-dimensional model is typically generated using a three-dimensional modeling tool, but may also be generated using other methods. In an embodiment of the present application, attributes such as shape, size, and posture of a boom system of a construction machinery are described using a three-dimensional model.

In an embodiment of the present application, the at least one boom section of the three-dimensional model of the boom system is obtained by performing weight reduction optimization with a single boom section as an optimization object. In other words, weight reduction processing has been applied to at least one boom section of three-dimensional model. Specifically, the embodiments of the present application do not impose any limitations on the weight reduction optimization method for a single boom section. Topology optimization can be performed with a single boom section as the optimization object. For example, in conjunction with the load boundary conditions of the boom section, weight reduction optimization can be performed by taking the element density in the design domain of the boom section as an optimization variable, the operating stress of the boom section being less than its corresponding stress threshold as a constraint condition, and minimizing the volume of the boom section as an objective function to obtain the three-dimensional model.

Step 120, performing structural weight reduction optimization on the three-dimensional model with the boom system as an optimization object to obtain a boom system weight reduction model, wherein the boom system weight reduction model includes a plurality of plates.

In an embodiment of the present application, secondary weight reduction optimization is performed on the basis of the three-dimensional model to further eliminate the design redundant mass. Specifically, the present application embodiments do not impose any limitations on the weight reduction optimization method for the boom system, and topology optimization can be performed with the boom system as the optimization object. For example, in conjunction with the load boundary conditions of the boom system, weight reduction optimization is performed by taking the various plates of each boom section within the boom system as the optimization variables, the operating stress of the boom system being less than its corresponding stress threshold as a constraint condition, and minimizing the volume of the boom system as an objective function to obtain the boom system weight reduction model.

It should be noted that the boom system weight reduction model is composed of a plurality of boom sections connected in sequence, each boom section consisting of a plurality of plates. Thus, the boom system weight reduction model includes a plurality of plates.

Step 130, selecting a target optimization object from all the plates.

In an embodiment of the present application, the selection of the target optimization object is performed in units of plates.

Step 140, according to a mass of the boom system corresponding to the three-dimensional model and a mass of the boom system corresponding to the boom system weight reduction model, determining a redundant mass.

In an embodiment of the present application, the mass of the boom system corresponding to the three-dimensional model is $M_0$, the mass of the boom system corresponding to the boom system weight reduction model is $M_1$, and the redundant mass that can be redistributed is determined by subtracting $M_1$ from $M_0$, which ensures that the model obtained after optimization does not exceed $M_0$, i.e., the mass of the boom system corresponding to the three-dimensional model.

Step 150, according to the redundant mass and the target optimization object, optimizing the boom system weight reduction model with an objective of minimizing the tip deflection of the boom system to obtain a target optimization model.

In the embodiment of the present application, a mathematical model for optimization of mass allocation of the boom system at different boom postures of the truck-mounted concrete pump is established with the mass of each region of the boom system as a variable, see the following equations (1)-(5):

Find

$$X=[X_1,X_2,...,X_n]^T \in R^N \quad (1)$$

$$M(X)=X_1+X_2+\cdots+X_n \quad (2)$$

$$\text{Min Disp} \quad (3)$$

s.t.

$$M(X)=M_0 \quad (4)$$

$$X_{min} \leq X_i \leq X_{max}, \ i=1,2,3,...,N \quad (5)$$

Wherein, X is the masses of different regions of the boom system, Xn is the mass of the nth region within a design region, N is the number of regions of the boom system, $R^N$ is the design region, $M_0$ is the mass of the boom system corresponding to the three-dimensional model, M(X) is the mass of the boom system corresponding to the target optimization model, Disp is the tip deflection of the boom system, $X_{min}$ and $X_{max}$ are the preset minimum value and the preset maximum value corresponding to the masses of the different regions of the boom system, respectively, and the mass of the boom system after the final optimization needs to be equal to the mass of the boom system corresponding to the three-dimensional model. It should be noted that the design region can be understood as a region of the boom where modifications to the design are feasible. Certain regions of the boom cannot be used for design modifications because they are originally equipped with components such as connectors. Therefore, these regions cannot be considered as design regions.

For construction machinery, in particular truck-mounted concrete pumps, it is crucial to pay close attention to the amplitude on the end of the boom, as it affects the efficiency of material distribution and construction safety. The amplitude on the end of the boom is the stiffness response of the boom system under dynamic loads, while the tip deflection is the stiffness response of the boom system under static loads. Under the same dynamic load, the smaller the tip deflection, the smaller the amplitude. By taking minimizing the tip deflection of the boom system as the objective function, and the mass of the boom system being less than the mass of the boom system corresponding to the three-dimensional model as the constraint condition, the redundant mass is redistributed to the boom system weight reduction model with respect to the target optimization object under the optimal solution, and consequently, optimization is performed to obtain the target optimization model. Minimizing the tip deflection of the boom system can refer to minimizing the vertical displacement of the end of the boom system under static loads, minimizing the lateral displacement, minimizing both vertical and lateral displacements simultaneously, minimizing a weighted sum of the two displacements by assigning respective weight coefficients, or even minimizing the displacement along a specific direction of interest.

Accordingly, in the method for structural optimization of the boom system provided by the embodiment of the present application, after obtaining the three-dimensional model of the boom system by performing weight reduction optimization on at least one boom section with a single boom section as the optimization object, secondary structural weight reduction optimization is performed on the three-dimensional model with the boom system as the optimization object, and the redundant mass from the secondary weight reduction optimization is redistributed to reduce the tip deflection of the boom. This approach not only ensures the lightweighting of the boom system through weight reduction optimization with a single boom section as the optimization object but also reduces boom vibrations by redistributing the redundant mass.

In an alternative embodiment, step 120 includes:

according to the three-dimensional model, a finite element model of the boom system is constructed;

according to the finite element model, constructing first optimization mathematical models of the boom system under different boom posture categories by taking an element density of the boom system as a first design variable, minimizing the mass of the boom system as a first objective function, and a boom operating stress being less than a preset stress threshold as a first constraint condition;

solving each first optimization mathematical model to determine an initial boom system weight reduction model under each boom posture category; and

determining, for the initial boom system weight reduction model under each boom posture category according to a optimization solution intersection selection principle, a first optimization solution intersection under all boom posture categories as the boom system weight reduction model.

Specifically, the three-dimensional model can be imported into the Hypermesh software to construct a Finite Element Model of the boom system in the Optistruct module. The finite element model discretizes the three-dimensional model into a mesh, resulting in each region of the boom system having a simple form. This allows for optimization design based on the finite element model.

By utilizing the SIMP (Solid Isotropic Material with Penalization) method, according to the finite element model, first optimization mathematical models of the boom system under different boom posture categories are constructed by taking an element density of the boom system as a first design variable, minimizing the mass of the boom system as a first objective function, and a boom operating stress being less than a preset stress threshold as a first constraint condition, see the following equations (6)-(10):

Find

$$x=[x_1,x_2,\ldots,x_e]^T \in R^n \ , \quad e=1,\cdots,N \qquad (6)$$

Minimize:

$$V=f \cdot V_0 \qquad (7)$$

Subject to:

$$\sigma \leq [\sigma_r] \qquad (8)$$

$$F=KU \qquad (9)$$

$$0<x_{min} \leq x_e \leq x_{max} \leq 1 \qquad (10)$$

Wherein, x is the first design variable, and represents the element densities of different regions of the boom system, $x_e$ is the element density of the e-th element within the design region, N is the number of elements of the design region, Rn is the design region, V is the first objective function, and represents the volume of the optimized system, $V_0$ is an initial volume of the boom system structure, f is a volume fraction, $\sigma$ is the operating stress of the boom, $[\sigma_r]$ is the preset stress threshold, K is an overall stiffness matrix of the boom system, U is an overall displacement vector of the boom system; F is a load vector of the boom system; $x_{min}$ and $x_{max}$ are the preset minimum and maximum values corresponding to the element densities in different regions of the boom system. The volume of the optimized boom system is minimized under stress constraints, which means that the mass $M_1$ of the boom system corresponding to the boom system weight reduction model is minimized.

Each of the first optimization mathematical models is solved to determine the initial boom system weight reduction model under each boom posture category. For the initial boom system weight reduction model under each boom posture category according to a optimization solution intersection selection principle, a first optimization solution intersection under all boom posture categories is determined as the boom system weight reduction model.

Please refer to FIG. 2, which schematically illustrates a boom system weight reduction model according to an embodiment of the present application. As shown in FIG. 2, taking a boom system having three boom sections as an example, the boom system includes a first boom section 210, a second boom section 220 and a third boom section 230, and each boom section incorporates hollowed-out regions to achieve weight reduction. The first boom section 210 includes first hollowed-out regions 211, the second boom section 220 includes second hollowed-out regions 221, and the third boom section 230 includes third hollowed-out regions 231. The hollowed-out regions of the different boom sections are different in shape, size and position to satisfy the optimal design of minimizing the mass of the boom system.

The weight reduction optimization method of the present application is described in terms of topological optimization, but other forms can also be adopted, such as milling and thinning a partial region of the plate (not fully hollowed out), and the like. The embodiments of this application do not impose any limitations on this aspect.

Thereby, secondary structural weight reduction optimization with the boom system as the optimization object based on the three-dimensional model is achieved, providing an optimization space for subsequent weight redistribution.

In an embodiment of the present application, the first constraint condition further includes that the tip deflection of the boom system is less than or equal to a preset deflection threshold, which means that the tip deflection of the boom system in the weight reduction model is restricted.

The present application provides two illustrative explanations of the optimization solution intersection selection principle. The optimization solution intersection selection principle is described below, and will not be repeated later.

In an embodiment of the present application, the optimization solution intersection selection principle includes:

an intersection of optimization solutions under each boom posture category is found; and

in a case where there is no intersection of the optimization solutions under each boom posture category, the optimization solution corresponding to the boom posture category with the smallest proportion is removed, and the step of finding an intersection of optimization solutions under each boom posture category is repeatedly performed until an intersection of optimization solutions is obtained, wherein the proportion of each boom posture category is determined according to actual operating conditions.

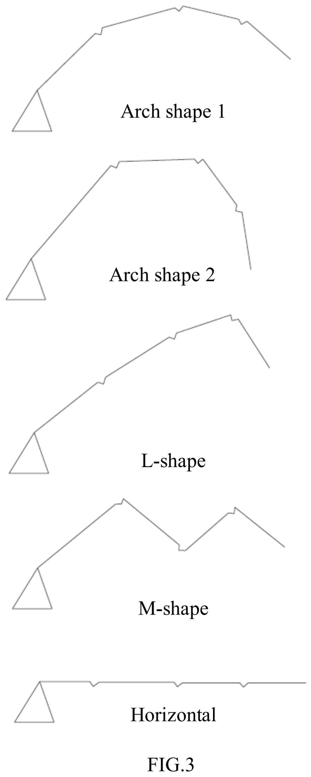

It should be noted that the boom posture categories during operation of the boom system also vary depending on parameters such as the type and model of the construction machinery. Please refer to FIG.3, which schematically illustrates structural diagrams of different boom posture categories when the boom system is operating according to embodiments of the present application. As shown in FIG. 3, taking the boom system of a certain model of a truck-mounted concrete pump as an example, based on statistics on the frequency of the boom posture occurrence or the operating time proportion from the actual operation of the truck-mounted concrete pump, the boom posture categories of the boom system can be classified into five types: arch shape 1, arch shape 2, L-shape, M-shape, and horizontal. The proportions of these five boom posture categories among all boom postures of the truck-mounted concrete pump are $\alpha_1, \alpha_2, \alpha_3, \alpha_4$, and $\alpha_5$, respectively, and $\alpha_1 > \alpha_2 > \alpha_3 > \alpha_4 > \alpha_5$.

Specifically, the intersection of the optimization solutions under each boom posture category is found. In the embodiments of the present application, there are a total of five boom posture categories, and each posture category has an optimization solution when solving. Here, the optimization solution can be understood as a set containing all solutions under the particular boom posture category. Therefore, there are five optimization solutions, and the intersection of these five solutions is found. If there is an intersection, the intersection of the optimization solutions is directly obtained; if there is no intersection, the optimization solution corresponding to the boom posture category with the smallest proportion is removed. Taking the previous context as an example, after removing the optimization solution corresponding to the horizontal boom posture category, the intersection of the optimization solutions is found again for the remaining four boom posture categories: arch shape 1, arch shape 2, L-shape, and M-shape, until the intersection of the optimization solutions is obtained. In an extreme case, the optimization solution corresponding to the boom posture category with the largest proportion (arch shape 1) is taken as the optimal solution intersection.

In an embodiment of the present application, the optimization solution intersection selection principle includes:

for each boom posture category, an intersection of optimization solutions of boom postures with an operating time proportion exceeding a preset proportion threshold is found;

in a case where there is no intersection of the optimization solutions of the boom postures with an operating time proportion exceeding a preset proportion threshold under each boom posture category, the optimization solution corresponding to the boom posture category with the smallest proportion is removed, and the step of finding, for each boom posture category, an intersection of optimization solutions of boom postures with an operating time proportion exceeding a preset proportion threshold is repeated performed until an intersection of optimization solutions is obtained, wherein the proportion of each boom posture category is determined according to actual operating conditions.

Additionally, if the previous method cannot obtain the optimal solution intersection or cannot quickly obtain it, the embodiments of the present application also provide another optimization solution intersection selection principle.

Specifically, for each boom posture category, an intersection of optimization solutions of boom postures with an operating time proportion exceeding a preset proportion threshold is found. The preset proportion threshold can be set according to actual requirements; for example, it can be 60%, and the embodiments of this application do not impose any limitations on this. It should be understood that under each boom posture category, the operating times of specific boom postures may vary, and the boom posture under an extreme operating condition may have a relatively low proportion. Therefore, the boom posture with a relatively low operating time proportion can be removed, and the intersection of the optimization solutions of the boom postures with the operating time proportion exceeding the preset proportion threshold can be found. Similarly, if there is an intersection, the intersection of the optimization solutions is directly obtained; if there is no intersection, the optimization solution corresponding to the boom posture category with the smallest proportion is removed until the intersection of the optimization solutions is obtained.

In an embodiment of the present application, by considering the multi-posture characteristic of the boom in the actual work of the construction machinery, the intersection of the optimization solutions for the boom system is selected based on the proportions of different postures, which is more in line with the actual situation. Regarding the two optimization solution intersection selection principles mentioned above, the first one is more comprehensive because it considers all boom posture categories, covering the theoretical operating range of the boom system. The second one involves selecting optimization solutions and processing the optimization solutions of the boom postures with an operating time proportion exceeding a preset proportion threshold. The second one selects the boom postures under typical operating conditions from each boom posture category and discards the postures under low-probability operating conditions of the boom system, thereby avoiding situations where the optimal solution intersection cannot be obtained or cannot be obtained quickly.

In an alternative embodiment, step 130 includes:

each plate is divided into a plurality of independent regions;

second optimization mathematical models of the boom system under different boom posture categories are constructed by taking plate thicknesses of the plurality of independent regions as a second design variable, minimizing the tip deflection of the boom system as a second objective function, and the mass of the boom system being less than or equal to a total mass of the boom system corresponding to the boom system weight reduction model as a second constraint condition;

each second optimization mathematical model is solved to obtain a sensitivity coefficient relative to the tip deflection of the boom system and a sensitivity coefficient relative to the mass of the boom system of the plate thickness variable of each independent region under each boom posture category; and

according to the optimization solution intersection selection principle, the independent region with the sensitivity coefficient relative to the tip deflection being greater than the first coefficient threshold and the sensitivity coefficient relative to the mass being less than a second coefficient threshold under each boom posture category is selected as the target optimization object.

The boom system weight reduction model obtained in step 120 is used as an object of study, and based on the size of the plate, the plate is divided into a moderate number of independent regions in a predetermined direction, which may be the longitudinal direction, i.e., the length direction of the boom. Dividing into too many regions will lead to an increase in optimization variables and a decrease in optimization calculation efficiency, while dividing into too few regions will result in insignificant optimization effects. The number of regions can be set according to actual requirements, and the embodiments of the present application do not impose any limitations on this.

Second optimization mathematical models of the boom system under different boom posture categories are constructed by taking plate thicknesses of the plurality of independent regions as a second design variable, minimizing the tip deflection of the boom system as a second objective function, and the mass of the boom system being less than or equal to a total mass ($M_1$) of the boom system corresponding to the boom system weight reduction model as a second constraint condition, see the following equations (11)-(14):

Find

$$X=[X_1,X_2,\ldots,X_N]^T \in R^N \qquad (11)$$

$$\text{Min Disp} \qquad (12)$$

s. t.

$$M(X) \leq M_1 \qquad\qquad (13)$$

$$X_{imin} \leq X_i \leq X_{imax}, \ i = 1, 2, 3, \ldots, N \qquad (14)$$

Wherein, X is the second design variable, and represents the plate thickness of each independent region in the boom system, $X_N$ is the plate thickness dimension of the Nth plate in the design region, N is the number of plates of the design region, $R^N$ is the design region, Disp is the tip deflection of the boom system, $M_1$ is the mass of the boom system corresponding to the boom system weight reduction model, $X_{imin}$ and $X_{imax}$ are a preset minimum value and a preset maximum value corresponding to plate thicknesses of different independent regions of the boom system, and the mass of the boom system after final optimization needs to be less than or equal to the mass of the boom system corresponding to the boom system weight reduction model.

Each second optimization mathematical model is solved, and the Sobol global sensitivity analysis algorithm is used to obtain the sensitivity coefficient of the plate thickness variable of each independent region relative to the tip deflection of the boom system and the sensitivity coefficient thereof relative to the mass of the boom system under each boom posture category. According to the optimization solution intersection selection principle, the independent region with the sensitivity coefficient relative to the tip deflection being greater than the first coefficient threshold and the sensitivity coefficient relative to the mass being less than a second coefficient threshold under each boom posture category is selected as the target optimization object. Both the first coefficient threshold and the second coefficient threshold can be set according to actual requirements, and the embodiments of the present application do not impose any limitations on this.

Thus, by identifying the plate that is more sensitive to the tip deflection of the boom system among all the plates as the target optimization object, it is possible to achieve a more ideal effect of reducing the tip deflection of the boom system with a smaller increase in mass.

In an optional embodiment, the step that each plate is divided into the plurality of independent regions includes:

each plate is divided into a connected region and a non-connected region, wherein the connected region is where each plate is connected to other plates; and
for each plate, the connected region is divided into a first number of independent regions and the non-connected region is divided into a second number of independent regions, wherein the first number is greater than the second number.

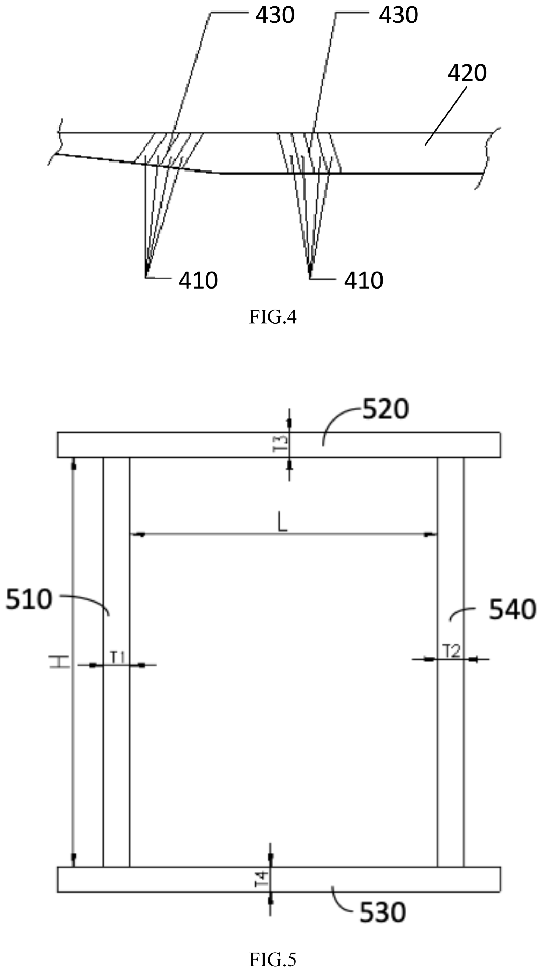

In particular, please refer to FIG. 4, which schematically illustrates a structural diagram of a plate according to an embodiment of the present application. As shown in FIG. 4, in the embodiment of the present application, during plate division, a plate 400 is divided into a connected region 410 and a non-connected region 420 according to whether it is connected to other plates. It should be understood that there is a difference in area between the connected region 410 and the non-connected region 420, the non-connected region 420 having a larger area than the connected region 410, and typically a larger difference in area.

The place where the plates are connected is a weld location 430, preferably the plate division is performed at the weld location 430, and the plate division is densely performed within a preset range from the weld location 430. The preset range can be set according to actual requirements, and the present embodiment is not limited thereto. Thus, the purpose of the division is to find a more suitable plate division location, i.e., to redesign the weld location so that the tip deflection of the boom system is minimized.

In an alternative embodiment, the method further includes:
the redundant mass is divided into at least one target mass increment according to a preset weight.

Based on this, Step 150 includes:
Step 151, according to the at least one target mass increment, a preset priority order of the at least one target mass increment, and the target optimization object, the boom system weight reduction model is optimized with the objective of minimizing the tip deflection of the boom system to obtain a target optimization model.

In particular, a preset weighting factor is introduced when the redundant mass $(M_0-M_1)$ is distributed. The number of the preset weights is determined according to the number of the target mass increments, taking 3 as an example, the preset weights include $\lambda_1$, $\lambda_2$, and $\lambda_3$, wherein, $\lambda_i = m_i/(M_0-M_1)$, i = 1, 2, 3.

In the embodiment of the present application, the preset weighting factor may be determined according to a genetic algorithm, and the preset priority order of the plurality of target mass increments may be determined according to the preset weights.

Embodiments of the present application schematically provides two methods for determining the preset weight. First, the preset weighting factor can be determined via optimizing and solving by using a genetic algorithm, a maximum number of evolutionary generations is set, an initial population is randomly generated for the preset weight, an optimal solution in the evolutionary process is obtained by selection operation, crossover, and mutation operations, and a specific genetic algorithm can be set according to actual requirements, and the embodiment of the present application is not limited to this. Second, the preset weighting factor can be obtained according to engineering experience, e.g., $\lambda_1 = 5$, $\lambda_2 = 3$, $\lambda_3 = 2$.

The preset priority order of the target mass increments may be determined according to the preset weights, for example, in the case of $\lambda_1 = 5$, $\lambda_2 = 3$, $\lambda_3 = 2$, the preset priority of the first target mass increment is the highest, the preset priority of the second target mass increment ranks second, and the preset priority of the third target mass increment is the lowest.

Based on step 150, further optimization can be carried out according to at least one target mass increment obtained after distribution of the redundant mass.

In an embodiment of the present application, the plurality of target mass increments includes a dimensional optimization mass increment, a topography optimization mass increment, and a baffle design optimization mass increment.

The target mass increments of the embodiments of the present application are distributed according to three optimization methods: dimensional optimization, topography optimization, and baffle design optimization. It should be understood that other methods can also be adopted for mass increment optimization, and the embodiments of the present application do not impose any limitations on this.

The process of obtaining the target optimization model is schematically described below by taking the preset priorities for the dimensional optimization mass increment, the topography optimization mass increment, and the baffle design optimization mass increment as an example.

In an alternative embodiment, step 151 includes:

Step 151a, plate thickness dimensional optimization is performed on the boom system weight reduction model based on the target optimization object and the dimensional optimization mass increment to obtain a boom system dimensional optimization model;

Step 151b, topography optimization is performed on the boom system dimensional optimization model based on the target optimization object and the topography optimization mass increment to obtain a boom system topography optimization model; and

Step 151c, baffle design optimization is performed on the boom system topography optimization model based on the target optimization object and the baffle design optimization mass increment to obtain a boom system baffle design optimization model, which serves as the target optimization model.

Schematically, in the order of the dimensional optimization mass increment $m_1$, the topography optimization mass increment $m_2$, and the baffle design optimization mass increment $m_3$, the subsequent optimization steps are performed on the basis of the optimization model obtained from the preceding steps. By adopting a progressive optimization approach, the mass of the boom system can be better distributed, resulting in a more uniform stiffness distribution within the boom system. It should be noted that if one of the target optimization objects, for example, the target optimization object A, undergoes plate thickness dimensional optimization in step 151a, it is not recommended to perform other optimizations on the target optimization object A in subsequent steps. This ensures a more reasonable stiffness distribution within the boom system. It should be understood that a variety of methods may be adopted, such as simultaneous optimization for selecting the optimal solution.

In an alternative embodiment, step 151a includes:

third optimization mathematical models of the boom system under different boom posture categories are constructed by taking masses of a plurality of independent regions in the boom system weight reduction model as a third design variable, minimizing the tip deflection of the boom system as a third objective function, and the mass of the boom system being less than or equal to a sum of the mass of the boom system corresponding to the boom system weight reduction model and the dimensional optimization mass increment as a third constraint condition;

each third optimization mathematical model is solved to determine an initial boom system dimensional optimization model under each boom posture category; and

for the initial boom system dimensional optimization model under each boom posture category according to the optimization solution intersection selection principle, a second optimization solution intersection under all boom posture categories is determined to obtain the boom system dimensional optimization model.

third optimization mathematical models of the boom system under different boom posture categories are constructed by taking masses of a plurality of independent regions in the boom system weight reduction model as a third design variable, minimizing the tip deflection of the boom system as a third objective function, and the mass of the boom system being less than or equal to a sum $(M_1+m_1)$ of the mass of the boom system corresponding to the boom system weight reduction model and the dimensional optimization mass increment as a third constraint condition; each third optimization mathematical model is solved to determine an initial boom system dimensional optimization model under each boom posture category by MFD (Method of Feasible Directions); for the initial boom system dimensional optimization model under each boom posture category according to the optimization solution intersection selection principle, a second optimization solution intersection under all boom posture categories is determined to obtain the boom system dimensional optimization model. It should be noted that when the mass is described herein as a design variable, any relevant factors related to the mass (relevant factors refer to changes in the relevant factors related to the mass will lead to changes in the numerical value of mass, such as plate thickness) can be used as design variables, which is not limited by the present application, and similar cases will not be described hereinafter.

Considering that there may be differences in the plate thicknesses of various independent regions in the boom system dimensional optimization model, for the convenience of actual manufacturing, it can be stipulated that plates in adjacent independent regions with a thickness difference of less than 1mm should be merged into a new plate. The thickness of the new plate can be taken as the average thickness of the included plates.

Please refer to FIG. 5, FIG. 5 schematically illustrates a structural diagram of the boom system after plate thickness dimensional optimization according to an embodiment of the present application. As shown in FIG. 5, with the illustrated direction as a reference, the boom includes a plurality of plates, specifically including a left web plate 510, an upper cover plate 520, a lower cover plate 530, and a right web plate 540. By optimizing the plate thickness dimension, the panel with the highest sensitivity coefficient relative to the tip deflection of the boom system is identified and strengthened. Since the boom is a closed box-type structure, for the cross-sectional dimensions, the optimal dimensions under the objective of minimizing the tip deflection of the boom system are obtained through optimization. The foregoing provides two optimization methods, namely optimizing the thickness of the plate itself or the cross-sectional dimensions of the boom. The two optimization methods can be used alone or in combination to reduce the tip deflection of the boom system.

Thus, the dimensional optimization of plate thickness for mass addition is achieved for independent regions with a large sensitivity coefficient relative to the tip deflection of the boom system and a small sensitivity coefficient relative to the mass of the boom system.

In an alternative embodiment, step 151b includes:

fourth optimization mathematical models of the boom system under different boom posture categories are constructed by taking masses of a plurality of independent regions in the boom system dimensional optimization model as a fourth design variable, minimizing the tip deflection of the boom system as a fourth objective function, and the mass of the boom system being less than or equal to a sum of the mass of the boom system corresponding to the boom system weight reduction model, the dimensional optimization mass increment, and the topography optimization mass increment as a fourth constraint condition;
each fourth optimization mathematical model is solved to determine an initial boom system topography optimization model under each boom posture category; and
for the initial boom system topography optimization model under each boom posture category according to the optimization solution intersection selection principle, a third optimization solution intersection under all boom posture categories is determined to obtain the boom system topography optimization model.

Fourth optimization mathematical models of the boom system under different boom posture categories are constructed by taking masses of a plurality of independent regions in the boom system dimensional optimization model as a fourth design variable, minimizing the tip deflection of the boom system as a fourth objective function, and the mass of the boom system being less than or equal to a sum $(M_1+m_1+m_2)$ of the mass of the boom system corresponding to the boom system weight reduction model, the dimensional optimization mass increment, and the topography optimization mass increment as a fourth constraint condition; each fourth optimization mathematical model is solved to determine an initial boom system topography optimization model under each boom posture category by MFD (Method of Feasible Directions); and for the initial boom system topography optimization model under each boom posture category according to the optimization solution intersection selection principle, a third optimization solution intersection under all boom posture categories is determined to obtain the boom system topography optimization model.

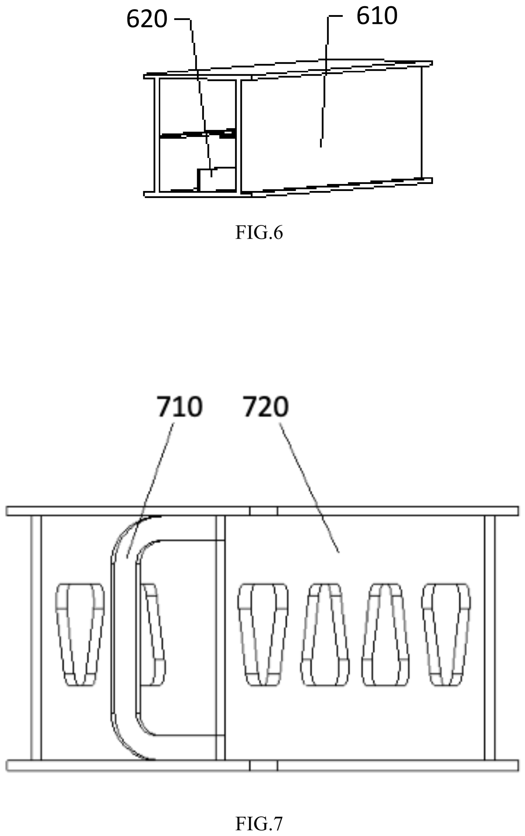

Through topography optimization, local structures of the boom system can be reinforced with ribs to reduce the tip deflection. Please refer to FIG. 6, which schematically illustrates the structural diagram of the boom system after topography optimization according to an embodiment of the present application. As shown in FIG. 6, the structure includes a boom 610 and ribs 620. Adding the cover plate and web ribs to the boom can reduce the tip deflection of the boom system. Adjusting parameters such as the length, position, quantity, and thickness of the ribs enables control over the reduction in tip deflection of the boom system.

Thereby, topography optimization by adding ribs to enhance the stiffness is achieved for the independent regions in the boom system where the sensitivity coefficient relative to the tip deformation is relatively large while the sensitivity coefficient relative to the mass is relatively small. This approach avoided stiffness mismatch.

In an alternative embodiment, step 151c includes:

fifth optimization mathematical models of the boom system under different boom posture categories are constructed by taking masses of a plurality of independent regions in the boom system topography optimization model as a fifth design variable, minimizing the tip deflection of the boom system as a fifth objective function, and the mass of the boom system being less than or equal to a sum of the mass of the boom system corresponding to the boom system weight reduction model, the dimensional optimization mass increment, the topography optimization mass increment, and the baffle design optimization mass increment as a fifth constraint condition;

each fifth optimization mathematical model is solved to determine an initial boom system baffle design optimization model under each boom posture category; and

for the initial boom system baffle design optimization model under each boom posture category according to the optimization solution intersection selection principle, a fourth optimization solution intersection under all boom posture categories is determined to obtain the boom system baffle design optimization model, which serves as the target optimization model.

Fifth optimization mathematical models of the boom system under different boom posture categories are constructed by taking masses of a plurality of independent regions in the boom system topography optimization model as a fifth design variable, minimizing the tip deflection of the boom system as a fifth objective function, and the mass of the boom system being less than or equal to a sum $(M_1+m_1+m_2+m_3)$ of the mass of the boom system corresponding to the boom system weight reduction model, the dimensional optimization mass increment, the topography optimization mass increment, and the baffle design optimization mass increment as a fifth constraint condition; each fifth optimization mathematical model is solved to determine an initial boom system baffle design optimization model under each boom posture category; and for the initial boom system baffle design optimization model under each boom posture category according to the optimization solution intersection selection principle, a fourth optimization solution intersection under all boom posture categories is determined to obtain the boom system baffle design optimization model, which serves as the target optimization model.

The internal baffle design of the boom can effectively reduce the tip deflection of the boom system with minimal mass addition. Additionally, the baffle design enhances force transmission paths, improves stress distribution in local structures, and increases structural strength. Please refer to FIG. 7, which schematically illustrates the structural diagram of the boom system after baffle design optimization according to an embodiment of the present application. As shown in FIG. 7, the structure includes an annular baffle 710 and a boom 720. By locally adding the baffle, the boom system can reduce the tip deflection. The shape and position of the baffle should be designed based on the actual situation of the object of analysis, while the form of the baffle is selected according to the principle of reducing the stress concentration and facilitating the manufacturing process.

Thereby, the baffle design by adding baffles to enhance the stiffness is achieved for the independent regions in the boom system where the sensitivity coefficient relative to the tip deformation is relatively large while the sensitivity coefficient relative to the mass is relatively small.

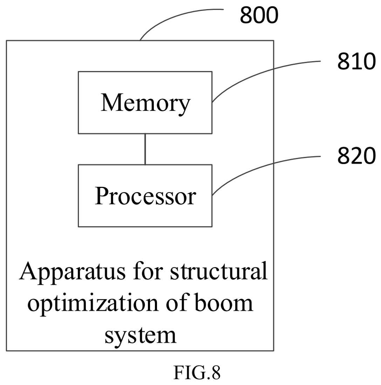

FIG. 8 schematically illustrates a structural diagram of an apparatus for structural optimization of a boom system according to an embodiment of the present application. As shown in FIG. 8, an embodiment of the present application provides an apparatus 800 for structural optimization of a boom system, which may include:

a memory 810, configured to store instructions; and

a processor 820, configured to recall the instructions from the memory 810 and, to implement the method for structural optimization of the boom system described above upon execution of the instructions.

The apparatus for structural optimization of a boom system provided by the embodiment of the present application is capable of realizing each process of the method for structural optimization of a boom system in the embodiment of the method, and achieves the same technical effects, which will not be described in detail herein to avoid repetition.

An embodiment of the present disclosure also provides a construction machinery whose boom system is obtainable by the above-described method for structural optimization of the boom system. As a result, vibration reduction of the boom system of the construction machinery is achieved. The aforementioned embodiments are illustrated using a truck-mounted concrete pump as an example, but the present disclosure is not limited to the optimization of only the boom system of the truck-mounted concrete pump. It can also be applied to the optimization of boom systems in other construction machinery, such as excavators, aerial work platforms, and hoisting machines.

An embodiment of the present application also provides a machine-readable storage medium having stored thereon instructions for causing a machine to perform the above-described method for structural optimization of the boom system.

Those skilled in the art will appreciate that the embodiments of the present application may be provided as methods, systems, or computer program products. Therefore, the present application may take the form of a full hardware embodiment, a full software embodiment, or an embodiment combining software and hardware. Besides, the present application may adopt the form of a computer program product implemented on one or more computer available storage media (including but not limited to a disk memory, a CD-ROM, an optical memory and the like) containing computer available program codes.

The present application is described with reference to the flow diagram and/or block diagram of the method, apparatus (system), and computer program product according to the embodiments of the present application. It should be understood that each flow and/or block in the flow diagram and/or block diagram and the combination of flows and/or blocks in the flow diagram and/or block diagram can be implemented by computer program instructions. These computer program instructions can be provided to processors of a general-purpose computer, a special-purpose computer, an embedded processor or other programmable data processing apparatuses to generate a machine, so that instructions executed by processors of a computer or other programmable data processing apparatuses generate a device for implementing the functions specified in one or more flows of the flow diagram and/or one or more blocks of the block diagram.

These computer program instructions can also be stored in a computer-readable memory capable of guiding a computer or other programmable data processing apparatuses to work in a specific manner, so that instructions stored in the computer-readable memory generate a manufacturing product including an instruction device, and the instruction device implements the functions specified in one or more flows of the flow diagram and/or one or more blocks of the block diagram.

These computer program instructions can also be loaded on a computer or other programmable data processing apparatuses, so that a series of operation steps are executed on the computer or other programmable apparatuses to produce computer-implemented processing, and thus, the instructions executed on the computer or other programmable apparatuses provide steps for implementing the functions specified in one or more flows of the flow diagram and/or one or more blocks of the block diagram.

In a typical configuration, a computing apparatus includes one or more processors (CPU), an input/output interface, a network interface and a memory.

The memory may include a volatile memory, a random access memory (RAM) and/or a non-volatile memory and other forms in a computer readable medium, such as a read-only memory (ROM) or a flash RAM. The memory is an example of the computer-readable medium.

The computer-readable medium includes permanent and non-permanent, and removable and non-removable media, and may achieve information storage through any method or technology. The information may be computer-readable instructions, data structures, modules of programs, or other data. Examples of the computer storage medium include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing apparatus. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further restrictions, the elements defined by the sentence "including a..." do not exclude that there are other same elements in the process, method, article or apparatus including the elements.

The above is merely the embodiments of the present application and are not intended to limit the present application. For those skilled in the art, the present application may have various modifications and changes. Any modifications, equivalent replacements, improvements, etc. made within the spirit and principle of the present application shall fall within the scope of the claims of the present application.

## Claims

1. A method for structural optimization of a boom system, comprising:

    acquiring a three-dimensional model of a boom system of a construction machinery, wherein at least one boom section of the three-dimensional model is obtained through weight reduction optimization with a single boom section as an optimization object;
    performing structural weight reduction optimization on the three-dimensional model with the boom system as an optimization object to obtain a boom system weight reduction model, wherein the boom system weight reduction model comprises a plurality of plates;

selecting a target optimization object from all the plates;

according to a mass of the boom system corresponding to the three-dimensional model and a mass of the boom system corresponding to the boom system weight reduction model, determining a redundant mass; and

according to the redundant mass and the target optimization object, optimizing the boom system weight reduction model with an objective of minimizing the tip deflection of the boom system to obtain a target optimization model.

2. The method according to claim 1, wherein the performing structural weight reduction optimization on the three-dimensional model with the boom system as the optimization object to obtain the boom system weight reduction model comprises:

according to the three-dimensional model, constructing a finite element model of the boom system;

according to the finite element model, constructing first optimization mathematical models of the boom system under different boom posture categories by taking an element density of the boom system as a first design variable, minimizing the mass of the boom system as a first objective function, and a boom operating stress being less than a preset stress threshold and tip deflection of the boom system being less than or equal to a preset deflection threshold as a first constraint condition;

solving each first optimization mathematical model to determine an initial boom system weight reduction model under each boom posture category; and

determining, for the initial boom system weight reduction model under each boom posture category according to a optimization solution intersection selection principle, a first optimization solution intersection under all boom posture categories as the boom system weight reduction model.

3. The method according to claim 1, wherein the selecting the target optimization object from all the plates comprises:

dividing each plate into a plurality of independent regions;

constructing second optimization mathematical models of the boom system under different boom posture categories by taking plate thicknesses of the plurality of independent regions as a second design variable, minimizing the tip deflection of the boom system as a second objective function, and the mass of the boom system being less than or equal to a total mass of the boom system corresponding to the boom system weight reduction model as a second constraint condition;

solving each second optimization mathematical model to obtain a sensitivity coefficient relative to the tip deflection of the boom system and a sensitivity coefficient relative to the mass of the boom system of the plate thickness variable of each independent region under each boom posture category; and

selecting, according to the optimization solution intersection selection principle, the independent region with the sensitivity coefficient relative to the tip deflection being greater than the first coefficient threshold and the sensitivity coefficient relative to the mass being less than a second coefficient threshold under each boom posture category as the target optimization object.

4. The method according to claim 3, wherein the dividing each plate into the plurality of independent regions comprises:

dividing each plate into a connected region and a non-connected region, wherein the connected region is where each plate is connected to other plates; and

dividing, for each plate, the connected region into a first number of independent regions and the non-connected region into a second number of independent regions, wherein the first number is greater than the second number.

5. The method according to claim 1, further comprising:

dividing the redundant mass into at least one target mass increment according to a preset weight; and

according to the redundant mass and the target optimization object, the optimizing the boom system weight reduction model with the objective of minimizing the tip deflection of the boom system to obtain the target optimization model, comprising:

according to the at least one target mass increment, a preset priority order of the at least one target mass increment, and the target optimization object, optimizing the boom system weight reduction model with the objective of minimizing the tip deflection of the boom system to obtain a target optimization model.

6. The method according to claim 5, wherein the preset weighting factor is determined according to a genetic algorithm, the preset priority order of the plurality of target mass increments is determined according to the preset weight, the plurality of target mass increments comprising a dimensional optimization mass increment, a topography optimization mass increment, and a baffle design optimization mass increment.

7. The method according to claim 6, wherein according to the plurality of target mass increments, the preset priority order of the plurality of target mass increments, and the target optimization object, the optimizing the boom system weight reduction model to obtain the target optimization model comprises:

performing plate thickness dimensional optimization on the boom system weight reduction model based on the target optimization object and the dimensional optimization mass increment to obtain a boom system dimensional optimization model;
performing topography optimization on the boom system dimensional optimization model based on the target optimization object and the topography optimization mass increment to obtain a boom system topography optimization model; and
performing baffle design optimization on the boom system topography optimization model based on the target optimization object and the baffle design optimization mass increment to obtain a boom system baffle design optimization model, which serves as the target optimization model.

8. The method according to claim 7, wherein the performing plate thickness dimensional optimization on the boom system weight reduction model based on the target optimization object and the dimensional optimization mass increment to obtain the boom system dimensional optimization model comprises:

constructing third optimization mathematical models of the boom system under different boom posture categories by taking masses of a plurality of independent regions in the boom system weight reduction model as a third design variable, minimizing the tip deflection of the boom system as a third objective function, and the mass of the boom system being less than or equal to a sum of the mass of the boom system corresponding to the boom system weight reduction model and the dimensional optimization mass increment as a third constraint condition;
solving each third optimization mathematical model to determine an initial boom system dimensional optimization model under each boom posture category; and
determining, for the initial boom system dimensional optimization model under each boom posture category according to the optimization solution intersection selection principle, a second optimization solution intersection under all boom posture categories to obtain the boom system dimensional optimization model.

9. The method according to claim 7, wherein the performing topography optimization on the boom system dimensional optimization model based on the target optimization object and the topography optimization mass increment to obtain the boom system topography optimization model comprises:

constructing fourth optimization mathematical models of the boom system under different boom posture categories by taking masses of a plurality of independent regions in the boom system dimensional optimization model as a fourth design variable, minimizing the tip deflection of the boom system as a fourth objective function, and the mass of the boom system being less than or equal to a sum of the mass of the boom system corresponding to the boom system weight reduction model, the dimensional optimization mass increment, and the topography optimization mass increment as a fourth constraint condition;
solving each fourth optimization mathematical model to determine an initial boom system topography optimization model under each boom posture category; and
determining, for the initial boom system topography optimization model under each boom posture category according to the optimization solution intersection selection principle, a third optimization solution intersection under all boom posture categories to obtain the boom system topography optimization model.

10. The method according to claim 7, wherein the performing baffle design optimization on the boom system topography optimization model based on the target optimization object and the baffle design optimization mass increment to obtain the boom system baffle design optimization model, which serves as the target optimization model comprises:

constructing fifth optimization mathematical models of the boom system under different boom posture categories by taking masses of a plurality of independent regions in the boom system topography optimization model as a fifth design variable, minimizing the tip deflection of the boom system as a fifth objective function, and the mass of the boom system being less than or equal to a sum of the mass of the boom system corresponding to the boom system weight reduction model, the dimensional optimization mass increment, the topography optimization mass increment, and the baffle design optimization mass increment as a fifth constraint condition;

solving each fifth optimization mathematical model to determine an initial boom system baffle design optimization model under each boom posture category; and

determining, for the initial boom system baffle design optimization model under each boom posture category according to the optimization solution intersection selection principle, a fourth optimization solution intersection under all boom posture categories to obtain the boom system baffle design optimization model, which serves as the target optimization model.

11. The method according to any one of claims 2, 3, 8-10, wherein the optimization solution intersection selection principle comprises:

finding an intersection of optimization solutions under each boom posture category; and

in a case where there is no intersection of the optimization solutions under each boom posture category, removing the optimization solution corresponding to the boom posture category with the smallest proportion, and repeatedly performing the step of finding an intersection of optimization solutions under each boom posture category until an intersection of optimization solutions is obtained, wherein the proportion of each boom posture category is determined according to actual operating conditions.

12. The method according to any one of claims 2, 3, 8-10, wherein the optimization solution intersection selection principle comprises:

finding, for each boom posture category, an intersection of optimization solutions of boom postures with an operating time proportion exceeding a preset proportion threshold;

in a case where there is no intersection of the optimization solutions of the boom postures with an operating time proportion exceeding a preset proportion threshold under each boom posture category, removing the optimization solution corresponding to the boom posture category with the smallest proportion, and repeatedly performing the step of finding, for each boom posture category, an intersection of optimization solutions of boom postures with an operating time proportion exceeding a preset proportion threshold until an intersection of optimization solutions is obtained, wherein the proportion of each boom posture category is determined according to actual operating conditions.

13. An apparatus for structural optimization of a boom system, comprising:

a memory, configured to store instructions; and

a processor, configured to recall the instructions from the memory and to implement the method for structural optimization of the boom system according to any one of claims 1 to 12 upon execution of the instructions.

14. A construction machinery, wherein a boom system of the construction machinery is obtained by the method for structural optimization of the boom system according to any one of claims 1 to 12.

15. A machine-readable storage medium having stored thereon instructions for causing a machine to perform the method for structural optimization of the boom system according to any one of claims 1 to 12.

acquiring a three-dimensional model of a boom system of a construction machinery, wherein at least one boom section of the three-dimensional model is obtained through weight reduction optimization with a single boom section as an optimization object — 110

performing structural weight reduction optimization on the three-dimensional model with the boom system as an optimization object to obtain a boom system weight reduction model, wherein the boom system weight reduction model comprises a plurality of plates — 120

selecting a target optimization object from all the plates — 130

according to a mass of the boom system corresponding to the three-dimensional model and a mass of the boom system corresponding to the boom system weight reduction model, determining a redundant mass — 140

according to the redundant mass and the target optimization object, optimizing the boom system weight reduction model with an objective of minimizing the tip deflection of the boom system to obtain a target optimization model — 150

FIG.1

FIG.2

Arch shape 1

Arch shape 2

L-shape

M-shape

Horizontal

FIG.3

FIG.4

FIG.5

FIG.6

FIG.7

800

810

Memory

820

Processor

Apparatus for structural optimization of boom system

FIG.8

# EP 4 654 067 A1

## INTERNATIONAL SEARCH REPORT

International application No.

**PCT/CN2023/141621**

### A. CLASSIFICATION OF SUBJECT MATTER

G06F 30/23(2020.01)i; G06F 30/15(2020.01)i; G06F 119/14(2020.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 臂架, 模型, 机械, 单臂, 单节臂, 减重, 轻量, 质量, 末端, 变形, 优化, 密度, 应力, 姿态, 尺寸, 形貌, 板厚, boom, model, mechanical, single arm, weight reduction, light, mass, end, deformation, optimization, density, stress, posture, size, topography, thickness

### C. DOCUMENTS CONSIDERED TO BE RELEVANT

| Category* | Citation of document, with indication, where appropriate, of the relevant passages | Relevant to claim No. |
|---|---|---|
| A | CN 112597610 A (UBTECH ROBOTICS CORP.) 02 April 2021 (2021-04-02) description, paragraphs 0048-0087 | 1-15 |
| A | CN 116702368 A (ZOOMLION HEAVY INDUSTRY SCIENCE AND TECHNOLOGY CO., LTD.) 05 September 2023 (2023-09-05) entire document | 1-15 |
| A | CN 112784465 A (LIUGONG CONSTRUCTION MACHINERY JIANGSU CO., LTD.) 11 May 2021 (2021-05-11) entire document | 1-15 |
| A | CN 116372937 A (UBTECH ROBOTICS CORP.) 04 July 2023 (2023-07-04) entire document | 1-15 |
| A | CN 116776716 A (ZOOMLION HEAVY INDUSTRY SCIENCE AND TECHNOLOGY CO., LTD.) 19 September 2023 (2023-09-19) entire document | 1-15 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 August 2024** | **14 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/141621**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022105216 A1 (ZOOMLION HEAVY INDUSTRY SCIENCE AND TECHNOLOGY CO., LTD.) 27 May 2022 (2022-05-27) entire document | 1-15 |

Form PCT/ISA/210 (second sheet) (July 2022)

**INTERNATIONAL SEARCH REPORT**
Information on patent family members

| International application No. |
| PCT/CN2023/141621 |

| Patent document cited in search report | | | Publication date (day/month/year) | Patent family member(s) | | | Publication date (day/month/year) |
|---|---|---|---|---|---|---|---|
| CN | 112597610 | A | 02 April 2021 | None | | | |
| CN | 116702368 | A | 05 September 2023 | None | | | |
| CN | 112784465 | A | 11 May 2021 | None | | | |
| CN | 116372937 | A | 04 July 2023 | None | | | |
| CN | 116776716 | A | 19 September 2023 | None | | | |
| WO | 2022105216 | A1 | 27 May 2022 | CN | 112441511 | A | 05 March 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311739031